Europäisches Patentamt

European Patent Office

Office européen des brevets

(11) Veröffentlichungsnummer: **0 163 080 B1**

(12) **EUROPÄISCHE PATENTSCHRIFT**

(45) Veröffentlichungstag der Patentschrift: **18.09.91**

(51) Int. Cl.⁵: **A01K 5/02**

(21) Anmeldenummer: **85104361.2**

(22) Anmeldetag: **11.04.85**

(54) **Verfahren zur Aufbereitung und Zuführung von pumpfähigen Viehfuttermischungen zu Verbraucherstellen.**

(30) Priorität: **26.05.84 DE 3419842**

(43) Veröffentlichungstag der Anmeldung:
**04.12.85 Patentblatt 85/49**

(45) Bekanntmachung des Hinweises auf die
Patenterteilung:
**18.09.91 Patentblatt 91/38**

(84) Benannte Vertragsstaaten:
**CH DE GB LI NL SE**

(56) Entgegenhaltungen:
**DE-A- 3 123 904**
**DE-B- 2 025 209**

(73) Patentinhaber: **WEDA-Dammann & Wester-kamp GmbH**

**W-2849 Goldenstedt 2 - Lutten(DE)**

(72) Erfinder: **Fahlbusch, Klaus**
**Paul Keller Strasse 19**
**W-2848 Vechta i.o.(DE)**

(74) Vertreter: **Busse & Busse Patentanwälte**
**Postfach 1226 Grosshandelsring 6**
**W-4500 Osnabrück(DE)**

EP 0 163 080 B1

## Beschreibung

Die Erfindung bezieht sich auf ein Verfahren zum Aufbereiten und Zuführen von pumpfähigen Viehfuttermischungen zu Verbraucherstellen gemäß dem Oberbegriff des Patentanspruchs.

Bei einem durch den Patentinhaber offenkundig vorbenutzten Verfahren der im Oberbegriff des Patentanspruchs angegebenen Art wird zur Versorgung von Verbraucherstellen gruppenweise mit Futtermischungen unterschiedlicher Rezepturen eine Futtermischung einer ersten Rezeptur zubereitet und durch die Ringleitung vorgefördert, bis die gesamte, von einer Futtermischung anderer Rezeptur gebildete Vorfüllung der Ringleitung in den Zwischenbehälter überführt und die Ringleitung im gesamten Bereich zwischen den Abschlußventilen mit Futter der ersten Rezeptur gefüllt ist. Die aus einer vorausgehenden Fütterungsperiode stammende Vorfüllung der Ringleitung wird in dem Zwischenbehälter bevorratet, bis wieder eine Futtermischung mit einer der Rezeptur der bevorrateten Restmenge entsprechenden Rezeptur im Futteranmischbehälter zubereitet ist. Zu diesem Zeitpunkt wird das bevorratete Restfutter aus dem Zwischenbehälter in den Futteranmischbehälter gepumpt oder abgelassen, um dort mit der Futtermenge aus zugeführten Primär-Futterbestandteilen vermischt zu werden. In Fällen, in denen Futtermischungen mit mehr als zwei Rezepturen benötigt werden und zu verfüttern sind, umfaßt die Fütterungseinrichtung dementsprechend mehrere Zwischenbehälter. Nach Versorgung sämtlicher Verbraucherstellen mit für diese vorgegebenen Teilmengen an Futter vorbestimmter Rezeptur bleibt die Ringleitung mit Futter der letztverfütterten Rezeptur gefüllt und in dem Zwischenbehälter oder den Zwischenbehältern bleiben die jeweils aus der Ringleitung verdrängten Restfuttermengen abweichender Rezeptur jeweils bis zur Zubereitung von Futtermischungen gleicher Rezeptur bevorratet. Die bevorrateten Futtermengen können infolge Luftzutritt Veränderungen erfahren. Da jeweils Futter in einer vom Gesamtvolumen der Ringleitung bestimmten Restmenge als Füllung in der Ringleitung verbleibt, ist das Verfahren beschränkt auf Viehfuttermischungen, die nicht nur zum Zeitpunkt ihrer Zubereitung im Futteranmischbehälter, sondern auch nach längerer Wartezeit, z.B. der Zeit zwischen aufeinanderfolgenden täglichen Fütterungsperioden, pumpfähig bleiben. Dies ist zum Beispiel bei in warmem Zustand verfütterten, fetthaltigen Futtermischungen nicht oder nicht zuverlässig der Fall, die infolge der Abkühlung so zähe werden können, daß sie jeder Förderung einen zu hohen Widerstand entgegensetzen.

Der Erfindung liegt die Aufgabe zugrunde, ein einfaches, auch automatisch durchführbares Verfahren zu schaffen, mit dem pumpfähige Futtermischungen aller Art, auch solche mit veränderlicher Zähigkeit, aufbereitet und Verbraucherstellen zugeführt werden können, wobei gleichzeitig die Möglichkeit bestehen soll, Verbraucherstellen unterschiedlich mit Futtermischungen voneinander abweichender Rezeptur zu versorgen.

Die Erfindung löst diese Aufgabe mit einem Verfahren gemäß dem Patentanspruch.

Das Verfahren nach der Erfindung stellt sicher, daß mit Ausnahme der Zeitspanne für die Zuführung von Futter zu ausgewählten Verbraucherstellen die Ringleitung mit Futter und in allen Zwischenzeiten mit Wasser gefüllt ist. Die Verbraucherstellen werden stets mit frischzubereitetem Futter versorgt, das warm oder kalt verfütterbar ist und ohne weiteres Bestandteile wie Fette etc. enthalten kann, die beispielsweise bei Auskühlung oder bei längeren Ruhezeiten in Zwischenbehältern oder Ringleitungen aushärten würden. Dabei hat sich überraschend herausgestellt, daß zwischen Futtermischungen und Wasser in der Ringleitung kaum Vermischungen auftreten, gleichgültig ob Futter Wasser verdrängt wie zu Beginn der Verfütterung der zubereiteten Futterbedarfsmenge oder Wasser Futter verdrängt, wie dies gegen Ende der Futterzuführung zu den Verbraucherstellen der Fall ist. Die Rohrleitungsstrecke, in der eine Vermischung auftritt, hat eine Länge von weniger als 1 m, in der Regel von nur 0,5 m. Da bei üblicherweise zur Verwendung kommenden Rohrquerschnitten für Ringleitungen 0,5 m Rohrleitung nur ein Volumen von einem Liter aufweist und 1 l Futtergemisch in der Regel 0,75 l Wasser und nur 0,25 l Trockenmasse enthält, treten Futterverfälschungen selbst bei jener Futterteilmenge nicht oder nicht nennenswert auf, die als letzte einer Verbraucherstelle zugeführt wird und dabei zwischen den Grenzflächen zu einer vorgeordneten Wassersäule und der verdrängenden nachlaufenden Wassersäule gelegen ist. Da die gesamte, während der täglichen Fütterungsperiode zu verfütternde Futterbedarfsmenge frisch zubereitet und praktisch zur Gänze verfüttert wird, können nacheinander Verbraucherstellen mit Futtermischungen unterschiedlicher Rezepturen beschickt werden, wobei die Verteilung der Verbraucherstellen, die jeweils mit ein und derselben Futtermischung zu beschicken sind, entlang der Ringleitung beliebig sein kann. Dies bedeutet zugleich, daß die Zuordnung der Verbraucherstellen zu Futtermischungen mit bestimmten Rezepturen jederzeit geändert werden kann. Da zwischen den Fütterungsperioden nur Wasser in der Ringleitung verbleibt, sind Sedimentierungserscheinungen, die ein homogenisierendes Vor-Umpumpen im Kreislauf erforderlich machen, ausgeschlossen, so daß sich die Fütterungszeit bzw. Dauer der Fütterungsperiode verringert.

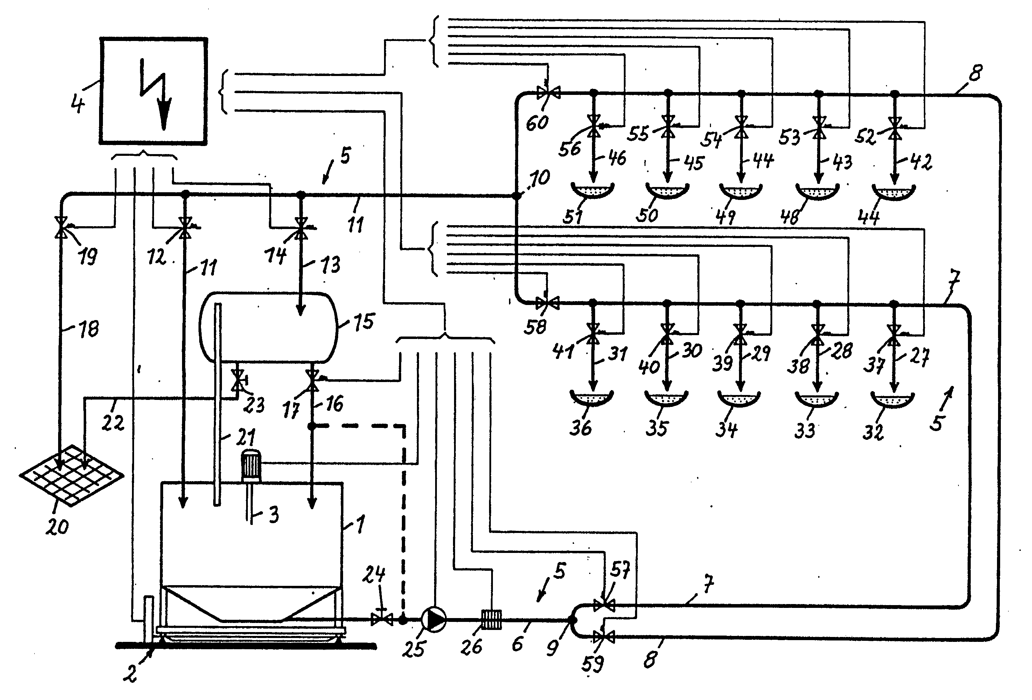

Weitere Einzelheiten ergeben sich aus der nachfolgenden Beschreibung des Verfahrens anhand der Zeichnung, in der ein Ausführungsbeispiel für eine erfindungsgemäß betreibbare Fütterungseinrichtung in einem Schema näher veranschaulicht ist.

Die in der Zeichnung veranschaulichte Fütterungseinrichtung umfaßt im einzelnen einen Futteranmischbehälter 1, der mit einer Wiegevorrichtung 2 und einem Rührwerk 3 versehen ist. Der Futteranmischbehälter 1 kann über nicht dargestellte Zuleitungen mit Zulaufsteuerorganen mit Futterbestandteilen aus Vorratsbehältern beschickt werden, so daß im Futteranmischbehälter Futtermischungen unterschiedlicher Rezepturen zubereitet werden können. Dies kann bei bevorzugter Steuerung aller Funktions- und Signalelemente der Fütterungseinrichtung durch eine elektronische Zentralsteuervorrichtung 4 mit programmierbarem Prozeßrechner vollautomatisch erfolgen. Aus dem Futteranmischbehälter 1 mündet eine Ringleitung 5 aus, die zunächst aus einem Einzelstrang 6 besteht, der sich dann in die Ringleitungsstränge 7,8 bei 9 verzweigt. Die Ringleitungsstränge 7,8 sind bei 10 wieder zu einer Einzelleitung 11 zusammengefaßt, die in den Futteranmischbehälter 1 einmündet und mit einem Ventil 12 versehen ist. Vor dem Ventil 12 mündet aus dem Ringleitungsteil 11 eine Anschlußleitung 13 mit Ventil 14 aus, die zu einem oberhalb des Futteranmischbehälters 1 angeordneten Zwischenbehälter 15 geführt ist. Dieser Zwischenbehälter 15 steht über eine Falleitung 16 mit Ventil 17 mit dem Futteranmischbehälter 1 in Verbindung. Aus dem Ringleitungsteil 11 mündet ferner noch eine Zweigleitung 18 mit Ventil 19 aus, die zu einem Abfluß 20 führt.

Der Zwischenbehälter 15, der mit einem Überlauf 21 versehen sein kann, ist über eine weitere Verbindungsleitung 22 mit Ventil 23 mit dem Abfluß 20 verbindbar. Sein Volumen ist so bemessen, daß es das komplette Füllvolumen der Ringleitung 5 aufnehmen kann.

In den Teil 6 der Ringleitung 5 sind hintereinander ein Handventil 24, eine Futterpumpe 25 und eine Durchfluß-Mengenmeßvorrichtung 26 eingeschaltet. Der Ringleitungsteil 6 ist in der Praxis sehr kurz und hat ein Füllungsvolumen, das im Vergleich mit dem Gesamtfüllungsvolumen der Ringleitung 5 völlig vernachlässigbar ist. An den Ringleitungsteil 7 sind Abzweigleitungen 27,28,29,30,31 angeschlossen, die zu Verbraucherstellen 32,33,34,35,36, z.B. in Gestalt von Futtertrögen, führen. In jede Abzweigleitung ist ein Auslaßventil 37,38,39,40 bzw. 41 eingeschaltet, die, wie Steuerleitungen andeuten, von der Zentralsteuervorrichtung 4 ansteuerbar sind. Die Verbraucherstellen 32 und 36 gehören beispielsweise zu einer ersten Gruppe A, die mit einer Futtermischung einer ersten Rezeptur zu beschicken sind. Die Verbraucherstellen 33, 34 und 35 gehören hingegen zu einer zweiten Gruppe B, die mit einer Futtermischung einer zweiten, unterschiedlichen Rezeptur beschickt werden sollen.

Der Ringleitungsstrang 8 ist ebenfalls mit Abzweigleitungen 42,43,44,45,46 versehen, die zu Verbraucherstellen 47,48,49,50 bzw. 51 führen und je ein Auslaßventil 52,53,54,55 bzw. 56 aufweisen. Auch die Auslaßventile 52 bis 56 sind bevorzugt durch die Zentralsteuervorrichtung 4 steuerbar, wie das Steuerleitungen andeuten. Die Verbraucherstellen 49,50,51 gehören wiederum einer ersten Gruppe A an, die mit einer Futtermischung einer ersten Rezeptur zu beschicken sind, während die Verbraucherstellen 47,48 einer zweiten Gruppe B angehören, die mit einer Futtermischung einer zweiten, unterschiedlichen Rezeptur beschickt werden sollen.

Am Anfang und am Ende der Ringleitungsstränge 7,8 sind diese jeweils mit einem Abschlußventil 57,58 bzw. 59,60 versehen. Auch diese Abschlußventile sind ebenso wie die Ventile 12,14, 17 und 19 von der Zentralsteuervorrichtung 4 gesteuert, die ebenso auch das Rührwerk 3 und die Futterpumpe 25 steuert und über Signalleitungen mit der Wiegevorrichtung und der Durchfluß-Mengenmeßvorrichtung 26 in Verbindung steht.

Vor Beginn eines Aufbereitens und Zuführens von Futtermischungen wird zunächst die Ringleitung 5 vollständig mit Wasser gefüllt. Der Zwischenbehälter 15 ist zu diesem Zeitpunkt leer und in dem bis dahin ebenfalls leeren Futteranmischbehälter wird nun eine Futtermischung mit jener ersten Rezeptur zubereitet, die an Verbraucherstellen 32,36 der Gruppe A im Ringleitungsstrang 7 verfüttert werden soll. Sobald die Bedarfsmenge für die Verbraucherstellen der Gruppe A zubereitet ist, werden die Abschlußventile 57,58 sowie das Ventil 14 geöffnet und die Futterpumpe in Betrieb gesetzt und dadurch eine Vorförderung des Futters als Futtersäule aus dem Futteranmischbehälter in den Ringleitungsteilen 6,7 vorgenommen, wobei die aus Wasser bestehende Vorfüllung der Ringleitungsteile 6,7,11 fortschreitend in den Zwischenbehälter 15 verdrängt wird. Sobald das Vorlaufende der Futtersäule die Verzweigungsstelle der Abzweigleitung 31 zur letzten mit Futter der ersten Rezeptur zu beschickenden Verbraucherstelle 36 der Gruppe A gerade passiert hat, wird der Übergang zum Zwischenbehälter 15 durch Schließen des Ventils 14 gesperrt und die Vorförderung der Futtersäule beendet.Zum Zeitpunkt dieser Beendigung steht bevorzugt das Ende der Futtersäule etwa 0,5 m in Strömungsrichtung hinter der Verzweigungsstelle der Abzweigleitung 31. Der Zeitpunkt der Beendigung der Vorförderung kann beispielsweise durch Anzeigegeräte hinter jeder Verzweigungsstelle von Abzweigleitungen signalisiert werden. Einfacher ist jedoch das Erfassen durch die Durchfluß-Mengenmeßvorrichtung 26, was ohne weiteres möglich ist, wenn man, z.B. durch Auslitern, jenes Volumen feststellt, das die Ringleitung im Bereich zwischen der Meßvorrichtung 26 und jeder Verzweigungsstelle von Abzweigleitungen besitzt. Kann z.B. die Ringleitung im Bereich zwischen der Meßvorrichtung 26 und der Verzweigungsstelle für die Abzweigleitung 31 60 kg Futter aufnehmen, so hat das Vorlaufende der Futtersäule die Verzweigungsstelle dieser Abzweigleitung um 0,5 m passiert, wenn die Meßvorvorrichtung 26 den Durchlauf einer Futtermenge von 61 kg (bei üblichem Rohrleitungsquerschnitt) anzeigt.

Vorzugsweise zugleich mit dem Schließen des Ventils 14 wird die in Strömungsrichtung erste Verbraucherstelle 32 der Gruppe A durch Öffnen des Ventils 37 mit Futter beschickt, und zwar mit einer vorgegebenen Teilmenge, die von der Meßvorrichtung 26 erfaßt wird. Nach Beschicken der Verbraucherstelle 32 und aller denkbaren weiteren Verbraucherstellen der Gruppe A entlang des Ringleitungsstranges 7 beginnt schließlich die Beschickung der Verbraucherstelle 36, wobei unterstellt wird, daß die für diese letzte Verbraucherstelle vorgegebene Teilfuttermenge größer ist als das zugehörige Teilfüllungsvolumen der Rohrleitung, mit anderen Worten bei Beginn der Beschickung der Verbraucherstelle 36 sich noch Futter im Futteranmischbehälter 1 befindet. Leert sich nun im Zuge der Beschickung der Verbraucherstelle 36 der Futteranmischbehälter 1 mit Futter, was durch die Wiegevorrichtung 2 festgestellt wird, so wird nun das Ventil 17 geöffnet und das in den Zwischenbehälter 15 verdrängte Wasser durch Schwerkraftwirkung annähernd schlagartig in den Futteranmischbehälter 1 überführt. In unmittelbarem Anschluß an das rückwärtige Ende der Futtersäule wird dieser nun das vorlaufende Ende einer Wassersäule nachgeschoben, welche das ihr vorlaufende Futter fortschreitend in der Rohrleitung verdrängt und dabei durch die Abzweigleitung 31 ausfördert. Sobald die für diese letzte Verbraucherstelle vorgegebene Futterteilmenge abgegeben ist und damit der Fütterungsvorgang durch Schließen des Ventils 41 abgeschlossen wird, befindet sich das Vorlaufende der Wassersäule dicht vor der Verzweigungsstelle der Abzweigleitung 31, so daß die gesamte Ringleitung praktisch wieder mit Wasser gefüllt und das gesamte zubereitete Futter verfüttert ist. Lediglich eine vernachlässigbar kleine Futtermenge entsprechend ca. 1 m Rohrleitungsvolumen und enthaltend etwa 0,5 kg Futtertrockenmasse, verbleibt als Vermischungsverlust in der Wasservorfüllung der Ringleitung. Nach Schließen des Auslaßventils 41 werden die Abschlußventile 57 und 58 geschlossen,wonach ein erneuter Fütterungsvorgang durch Zubereitung einer Futtermischung zweiter Rezeptur im Futteranmischbehälter 1 eingeleitet wird. Auch hier wird wiederum lediglich die Bedarfsmenge für eine tägliche Fütterungsperiode zubereitet, wonach sich die oben beschriebenen Beschickungsvorgänge für die Verbraucherstelle 33,34,35 der Gruppe B analog wiederholen. Auch nach Beschickung sämtlicher Verbraucherstellen der Gruppe B ist die zubereitete Bedarfsmenge an Futter der zweiten Rezeptur verbraucht und die Ringleitung wieder vollständig mit Wasser gefüllt. In entsprechender Weise können auch die Verbraucherstellen 49,50,51 der Gruppe A und 47,48 der Gruppe B des Ringleitungsstranges 8 jeweils mit Futter zugeordneter Rezeptur versorgt werden. Wie das dargestellte Beispiel zeigt, ist es vollkommen gleichgültig, ob die jeweils mit Futter ein und derselben Rezeptur zu versorgenden Verbraucherstellen etwa hintereinander angeordnet sind, wie das bei den Verbraucherstellen des Ringleitungsstranges 8 der Fall ist, oder in irgendeinem Wechsel aufeinander folgen, wie das bei den Verbraucherstellen des Ringleitungsstranges 7 der Fall ist.

In Abwandlung von dem dargestellten Ausführungsbeispiel kann die Fütterungseinrichtung auch eine Ringleitung aufweisen, die über die gesamte Länge zwischen dem Austritt aus dem Futteranmischbehälter 1 und dem Zwischenbehälter 15 als Einzelleitung ausgebildet ist. Die Zahl der der Ringleitung bzw. Ringleitungssträngen jeweils zugeordneten Verbraucherstellen ist beliebig und richtet sich nach den Gegebenheiten der Viehhaltung.

In Zeiten zwischen Fütterungsperioden ist es jederzeit möglich, die Ringleitung zu spülen bzw. ein Umpumpen im Kreislauf vorzunehmen. Für ein Umpumpen im Kreislauf sind die Ventile 57,58 bzw. 59,60 und das Ventil 12 zu öffnen, wohingegen zum Spülen unter Ersatz der Ringleitungsvorfüllung durch Frischwasser anstelle des Ventils 12 das Ventil 19 zu öffnen wäre. Die Zufuhr von Frischwasser erfolgt dabei zum Futteranmischbehälter. Statt einer Spülung über den Leitungsteil 18 kann die Spülung auch unter Einschluß des Zwischenbehälters vorgenommen werden, wenn anstelle des Ventils 19 die Ventile 14 und 23 geöffnet werden.

Wenn im Vorstehenden eine Fütterungseinrichtung veranschaulicht ist, bei der eine Zentralsteuervorrichtung 4 mit programmierbarem Prozeßrechner einen vollautomatischen Ablauf des Verfahrens ermöglicht, wobei die Zentralsteuervorrichtung Kodiereinheiten für eine unterschiedliche Kodierung der Auslaßventile zu den Verbraucherstellen aufweist, so versteht sich doch, daß die Verfahrensschritte auch durch eine Bedienungsperson durch Fernsteuerung vollzogen werden können.

**Patentansprüche**

**1.** Verfahren zum Aufbereiten und Zuführen von pumpfähigen Viehfuttermischungen zu einer Anzahl von Verbraucherstellen (32,33,34,35,36), bei dem
- in einem Futteranmischbehälter (1) eine der Futterbedarfsmenge je Fütterungsperiode entsprechende Menge an Futter zubereitet wird,
- das Futter in eine vom Futteranmischbehälter (1) ausgehende und zu diesem zurückführende, in einem Zwischenbereich gegebenenfalls in wahlweise beaufschlagbare Ringleitungsstränge (7,8) verzweigte Ringleitung (5) gefördert wird, an die eine der Anzahl der Verbraucherstellen (32,33,34,35,36) entsprechende Anzahl von Abzweigleitungen (27,28,29,30,31) mit je einem Auslaßventil (37,38,39,40,41) in Futterförderrichtung hintereinander angeschlossen sind,
- und bei dem das Futter aus der Ringleitung (5) in Teilmengen nacheinander an die Verbraucherstellen (32,33,34,35,36) abgegeben wird,
- wobei eine durch das Vorlaufende der in der Ringleitung (5) geförderten Futtersäule verdrängte Ringleitungsvorfüllung in einen über eine Leitung (16) mit Ventil (17) mit dem Futteranmischbehälter (1) verbindbaren Zwischenbehälter (15) überführt und vor Beginn der Futterabgabe an Verbraucherstellen der Übergang (13,14) von der Ringleitung (5) zum Zwischenbehälter (15) gesperrt wird, **dadurch gekennzeichnet,**
- daß als Ringleitungsvorfüllung Wasser verwendet wird,
- daß die Vorförderung der Futtersäule beendet und der Übergang (13,14) zum Zwischenbehälter gesperrt wird, sobald das Vorlaufende der Futtersäule die Verzweigungsstelle der Abzweigleitung (31) zu der in Futterförderrichtung in der Ringleitung (5) letzten mit Futter aus der zubereiteten Futtermenge zu beschickenden Verbraucherstelle (36) gerade passiert hat,
- und daß unmittelbar bei Ausförderung des letzten Futters aus dem Futteranmischbehälter (1) der im Zwischenbehälter (15) gesammelte Teil der Ringleitungsvorfüllung in den Futteranmischbehälter (1) überführt und zur Verdrängung der Futtersäule in der Ringleitung (5) in diese nachgefördert wird.

**Claims**

**1.** A method of preparing and conveying pumpable livestock feed mixtures to a number of feed stations (32, 33, 34, 35, 36), in which
- a quantity of feed corresponding to the quantity of feed required per feed period is prepared in a feed mixing tank (1),
- the feed is passed into a ring line (5) which starts from and returns to a feed mixing tank (1) and which, in an intermediate portion, possibly branches out into optionally operative ring line sections (7, 8) to which are connected a number of branch lines (27, 28, 29, 30, 31) disposed serially one after the other in the direction of feed conveyance and corresponding to the number of feed stations (32, 33, 34, 35, 36), each being fitted with an outlet valve (37, 38, 39, 40, 41),
- and in which the feed from the ring line (5) is delivered in partial quantities one after another to the feed stations (32, 33, 34, 35, 36),
- an initial filling of the ring line compressed by the forward-moving part of the feed column being conveyed in the ring line (5) is transferred to an intermediate container (15) which can be connected to the feed mixing tank (1) via a line (16) with a valve (17) the transition (13, 14) from the ring line (5) to the intermediate container (15) being blocked prior to commencement of feed delivery to feed stations, characterised in that
- water is used as the initial filling of the ring line,
- and in that the forward conveyance of the feed column is terminated and the transition (13, 14) to the intermediate container is shut off as soon as the leading end of the feed column has passed the point at which the branch line to what in the direction of feed conveyance is the last feed station (36) in the ring line (5) which is to be fed from the prepared quantity of feed,
- and in that immediately upon delivery of the last feed from the feed mixing tank (1) the part of the initial filling of the ring line which is collected in the intermediate container (15) is transferred to the feed mixing tank (1) and is passed into the ring line (5) in order to compress the feed column.

**Revendications**

1. Procédé pour préparer des mélanges d'aliments pour bétail pouvant être pompés et pour les amener à un certain nombre de points de consommation (32, 33, 34, 35, 36), suivant lequel :
   - dans un récipient de mélange des aliments (1) est préparée une quantité d'aliments correspondant aux besoins en aliments pour chaque période d'alimentation,
   - les aliments sont transportés dans une canalisation circulaire (5) partant du récipient de mélange des aliments (1) et y revenant, et le cas échéant, ramifiée, dans une zone intermédiaire, en des branches de canalisation circulaire (7, 8) pouvant être alimentées au choix, auxquelles sont raccordées successivement dans le sens de transport des aliments, un nombre de branchements (27, 28, 29, 30, 31) correspondant au nombre de points de consommation (32, 33, 34, 35, 36) et comportant chacun une valve de sortie (37, 38, 38, 40, 41),
   - et suivant lequel les aliments sont débités à partir de la canalisation circulaire (5) en quantités partielles successives aux points de consommation (32, 33, 34, 35, 36),
   - étant entendu qu'un remplissage préalable de la canalisation circulaire refoulé par l'extrémité d'amont de la colonne d'aliments transportée dans la canalisation circulaire (5), est transféré dans un récipient intermédiaire (15) pouvant être raccordé, par l'intermédiaire d'une conduite (16) comportant une valve (17), au récipient de mélange des aliments (1) et que le raccordement (13, 14) de la canalisation circulaire (5) au récipient intermédiaire (15) est fermé avant le début du débit des aliments aux points de consommation, caractérisé en ce que,
   - on utilise de l'eau pour le remplissage préalable de la canalisation circulaire,
   - le transport préalable de la colonne d'aliments est arrêté et le raccordement (13, 14) au récipient intermédiaire est fermé dès que l'extrémité d'amont de la colonne d'aliments a franchi l'endroit de branchement de la conduite de branchement (31) aboutissant au point de consommation (36) à approvisionner en dernier lieu, dans le sens du transport des aliments dans la canalisation circulaire (5), au moyen d'aliments provenant de la quantité d'aliments préparée,
   - et que, dès l'éjection des derniers aliments du récipient de mélange des aliments (1), la fraction du remplissage préalable de la canalisation circulaire rassemblée dans le récipient intermédiaire (15) est transférée dans le récipient de mélange des aliments (1) puis, en aval de celui-ci, dans la canalisation circulaire (5) en vue de refouler la colonne d'aliments dans celle-ci.